# EUROPÄISCHE PATENTSCHRIFT

(11) **EP 2 962 088 B1**
(45) Veröffentlichungstag und Bekanntmachung des Hinweises auf die Patenterteilung: **07.09.2022**
(21) Anmeldenummer: 14701906.1
(22) Anmeldetag: 15.01.2014
(51) Int. Cl.: G01N 21/90, G01M 11/04, G02B 7/00, G02B 23/04

(54) **INSPEKTIONSVORRICHTUNG MIT OPTISCHEM KANAL AUS KANALELEMENTEN**
INSPECTION DEVICE WITH OPTICAL CHANNEL MADE OF CHANNEL ELEMENTS
DISPOSITIF D'INSPECTION COMPRENANT UN CANAL OPTIQUE CONSTITUÉ D'ÉLÉMENTS DE CANAL

(30) Priorität: 28.02.2013 DE 102013101995
(43) Veröffentlichungstag der Anmeldung: 06.01.2016
(73) Patentinhaber: KHS GmbH, 44143 Dortmund (DE)
(72) Erfinder: BUCHWALD, Carsten, 53498 Bad Breisig (DE); SCHORN, Wolfgang, 53506 Hönningen (DE)
(86) Internationale Anmeldenummer: PCT/EP2014/000090
(87) Internationale Veröffentlichungsnummer: WO 2014/131484

(56) Entgegenhaltungen:
- DE-A1-102008 029 661
- GB-A- 2 373 556
- US-A- 5 490 011
- US-A1- 2004 264 841

## Beschreibung

Die Erfindung betrifft eine Inspektionsvorrichtung zum Kontrollieren von Behältern, insbesondere von Flaschen. Dabei erfolgt die Kontrolle mindestens eines Bereiches des Behälters optisch durch Kameras.

Eine derartige optische Kontrolle ist insbesondere für Getränkeflaschen bekannt. Dabei werden leere Flaschen oder ähnliche Behälter an einer Inspektionsvorrichtung vorbeigeführt, wobei bspw. die optische Kontrolle von oben erfolgt, während unterhalb eine Beleuchtungseinrichtung angeordnet ist. Es können verschiedene Bereiche einer Flasche oder eines sonstigen Behälters überprüft werden, bspw. der Flaschenboden oder der Mündungsbereich. Hierzu ist es bekannt, Aufnahmen der jeweiligen Bereiche der Behälter mit mehreren Kameras zu machen.

Beispielsweise zeigt die DE 10 2008 029 661 A1 eine Inspektionsvorrichtung zum Kontrollieren von Flaschen oder ähnlichen Behältern, mit der das Innere einer Flasche nach Reinigung auf unerwünschte Gegenstände, Verschmutzungen und/oder Beschädigungen kontrolliert werden kann. An einem optischen Kanal sind in einem Beispiel fünf Kameras angeordnet. Innerhalb des optischen Kanals sind optische Elemente wie Strahlteiler oder Linsen vorgesehen, so dass jede Kamera den zugeordneten Bereich beobachten kann. Dabei weisen aufeinander folgende Strahlteiler jeweils unterschiedliche Durchgangs- bzw. Reflektionswerte auf. Ein modular aufgebautes optisches Bausystem für die Verwendung auf Labortischen in Forschungsabteilungen wird in der GB 2 373 566 A offenbart. Das Bausystem umfasst eine Vielzahl unterschiedlicher Module. Dabei können die unterschiedlichen Module untereinander verbunden werden, um verschiedene geometrische Gerüststrukturen für das optische Bausystem bereitzustellen.

Es ist Aufgabe der Erfindung, eine Inspektionsvorrichtung vorzuschlagen, die variabel verwendbar ist.

Gelöst wird diese Aufgabe durch eine Inspektionsvorrichtung gemäß Anspruch 1 und einen hierfür vorgesehenen Einsatz gemäß Anspruch 10. Abhängige Ansprüche beziehen sich auf vorteilhafte Ausführungsformen der Erfindung.

Ein Ausgangspunkt der Erfindung ist die Überlegung, dass Änderungen im Aufbau der Inspektionsvorrichtung vereinfacht werden sollen, so dass die Inspektionsvorrichtung für verschiedene Einsatzzwecke leicht angepasst werden kann, bspw. für verschiedene Typen von Behältern, bei denen die jeweiligen Bereiche mit verschiedener Anzahl von Kameras überprüft werden sollen.

Die erfindungsgemäße Inspektionsvorrichtung weist einen optischen Kanal auf, an dem mindestens zwei Kameras angeordnet sind. Dabei verlaufen optische Pfade durch den optischen Kanal jeweils zwischen den Kameras und dem Behälter. Durch ein Strahlteilelement wird ein erster optischer Pfad von einem zweiten optischen Pfad getrennt, so dass beide Kameras durch den optischen Kanal hindurch den Behälter, insbesondere eine Getränkeflasche, inspizieren können.

Erfindungsgemäß ist vorgesehen, dass der optische Kanal, d. h. die Struktur, durch die die optischen Pfade verlaufen, mindestens zwei gleiche Kanalelemente aufweist. Wie nachfolgend anhand von bevorzugten Ausführungen näher erläutert wird, kann der optische Kanal modular aus einer Anzahl solcher gleicher Kanalelemente aufgebaut sein, die aneinander befestigt sind. Dabei weisen die Kanalelemente jeweils Öffnungen auf, durch die die optischen Pfade verlaufen.

Durch die Verwendung von mindestens zwei, jedoch bevorzugt weiteren zusätzlichen gleichen Kanalelementen kann der optische Kanal modular aufgebaut werden. Hierdurch ist es einfach möglich, für verschiedene Einsatzzwecke angepasste optische Kanäle aus den Kanalelementen zusammenzusetzen, wobei sich durch die Verwendung einer Mehrzahl gleicher Elemente Einsparungsvorteile ergeben. Auch ein bestehendes System kann durch eine geänderte Anordnung der Kanalelemente leicht umgebaut werden.

Gemäß einer Weiterbildung der Erfindung sind die Kanalelemente jeweils als Hohlelemente ausgebildet, bei denen eine Wandung einen Innenraum umgibt. Dabei sind in der Wandung die Öffnungen für die optischen Pfade vorgesehen. Der Innenraum kann zur Aufnahme von optischen Elementen genutzt werden, d. h. bspw. von Spiegelelementen, Linsen, Farbfiltern oder Strahlteilern. Die Wandung kann bspw. aus Metall, z.B. aus Aluminium oder einem Edelstahl bestehen. Bevorzugt sind die Wandungsflächen einstückig gebildet oder unlösbar miteinander verbunden, so dass eine gewünschte hohe Stabilität und exakte Ausrichtung gewährleistet sind. Die Hohlelemente können mindestens einseitig, bevorzugt an zwei gegenüberliegenden Seiten durch demontierbare Verschlussdeckel abgeschlossen werden. So können darin eingebrachte optische Elemente positioniert und erfindungsgemäß durch Verbindung mit mindestens einem der Verschlussdeckel auch befestigt werden.

In einer bevorzugten Ausführung sind die Kanalelemente jeweils quaderförmig ausgebildet und die Öffnungen für die optischen Pfade sind in den Seitenflächen angeordnet. Hierdurch kann ein optischer Kanal modular aufgebaut werden, bei dem die optischen Pfade jeweils parallel oder rechtwinklig verlaufen. Besonders bevorzugt ist dabei ein rotationssymmetrischer Aufbau der quaderförmigen Kanalelemente, und insbesondere eine Würfelform.

Durch den rotationssymmetrischen Aufbau der Kanalelemente können die Kanalelemente sehr variabel in verschiedenen Aufbauten verwendet werden, wobei die optischen Pfade in verschiedenen Richtungen stets gleiche Längen aufweisen. Besonders zeigt sich dieser Vorteil bei würfelförmigen Kanalelementen, wo die Länge der optischen Pfade bevorzugt stets ein ganzzahliges Vielfaches einer Standardlänge ist. Entsprechend leicht kann der übrige optische Aufbau, bspw. Linsensysteme auf die entsprechenden Strahlengänge abgestimmt werden.

Gemäß einer bevorzugten Weiterbildung der Erfindung weisen die Kanalelemente jeweils mindestens drei Öffnungen auf, durch die ein optischer Pfad verlaufen kann. Dabei ist weiter bevorzugt, dass eine erste und zweite Öffnung in Flucht angeordnet sind und eine dritte Öffnung unter einem Winkel hierzu, bevorzugt unter einem rechten Winkel. Dann kann eine Halterung für ein Strahlteilelement oder für ein Spiegelelement so vorgesehen sein, dass ein optischer Pfad von der ersten Öffnung über eine Reflektion am Strahlteilelement/Spiegelelement zur dritten Öffnung verläuft. Im Fall des Strahlteilelements verläuft dann zusätzlich ein zweiter optischer Pfad von der ersten zur in Flucht angeordneten zweiten Öffnung.

Für die Anbringung optischer Elemente, wie bspw. Strahlteilelemente, Spiegelelemente, optische Filter oder Linsenelemente an den Kanalelementen kann dort bspw. eine feste Halterung oder Aufnahme vorgesehen sein. Erfindungsgemäß ist hingegen als solche Aufnahme bzw. Halterung ein Einsatz für die Kanalelemente vorgesehen. Auch hierdurch wird der modulare Aufbau eines optischen Kanals unterstützt.

Bevorzugt kann ein solcher Einsatz in ein Kanalelement wechselbar eingebracht werden. Bspw. kann ein quader- oder würfelförmig ausgebildetes Kanalelement an mindestens vier Seitenflächen jeweils zentral angeordnete Öffnungen für die optischen Pfade aufweisen, während es an einer oder zwei Seitenflächen eine Öffnung zum Einbringen des Einsatzes als Halterung für optische Elemente aufweisen kann. Insbesondere ist bevorzugt, dass ein Einsatz in ein Kanalelement eingeschoben werden kann und dabei bereits am Kanalelement geführt und damit entsprechend exakt positioniert wird. Die Öffnungen in den Seitenflächen können durch Verschlussdeckel verschlossen werden, an denen der Einsatz auch bevorzugter Weise befestigt werden kann.

Ein Einsatz als Halterung für ein optisches Element, bspw. ein Strahlteilelement, Spiegelelement, optisches Filterelement oder Linsenelement, weist mindestens eine Öffnung zum Durchtritt eines optischen Pfades auf. Erfindungsgemäß sind an einem Einsatz zwei Öffnungen vorgesehen, die zueinander einen Winkel, bevorzugt einen rechten Winkel, bilden. Ein Einsatz kann mit einem dreiecksförmigen Haltekörper versehen sein, so dass ein Spiegel- bzw. Strahlteilerelement schräg zu einem eintreffenden optischen Pfad angeordnet ist, bevorzugt unter ca. 45°. In alternativen Ausgestaltungen kann ein Haltekörper auch eine abweichende Querschnittsform, bspw. eine Trapezform aufweisen, so dass ein optischer Pfad zwei- oder mehrfach aufgespalten werden kann.

An Kanalelementen können jeweils Seitenflächen mit einer Anzahl von Befestigungsbohrungen vorgesehen sein. Auf diese Weise ist es bspw. möglich, die Kanalelemente zur Bildung des optischen Kanals direkt miteinander oder mit weiteren Halterungen zu verbinden, bspw. mit Schrauben oder Bolzen. Auch die Kameras können so am optischen Kanal befestigt sein. Dabei ist bevorzugt, dass an den Kanalelementen eine Anordnung solcher Befestigungsbohrungen, d. h. ein sogenanntes Bohrbild, jeweils identisch vorgesehen ist. Hierdurch ist bei Benutzung der Befestigungsbohrungen automatisch eine passgenaue Anordnung sichergestellt.

Zur Abbildung des jeweils beobachteten Bereiches an der Kamera können verschiedene optische Elemente vorgesehen sein. Insbesondere kann ein Linsenelement zwischen dem optischen Kanal und dem Behälter angeordnet sein. Besonders bevorzugt ist dort ein Linsensystem mit mehreren Linsenelementen vorgesehen.

Nachfolgend wird eine Ausführungsform der Erfindung anhand von Zeichnungen näher beschrieben. In den Zeichnungen zeigen:
- Fig. 1: in perspektivischer Explosionsdarstellung Elemente eines optischen Kanals;

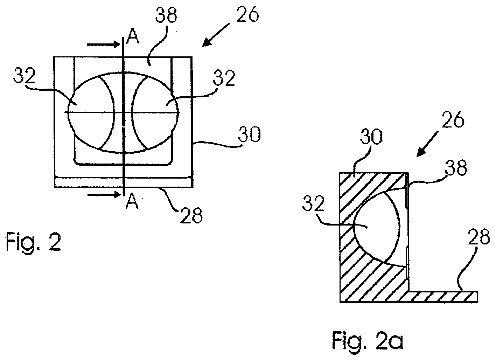

- Fig. 2: in Seitenansicht einen Einsatz für den optischen Kanal aus Fig. 1;
- Fig. 2a: eine Ansicht des Schnitts entlang der Linie A...A in Fig. 2;
- Fig. 3: eine erste Ausführungsform einer Inspektionsvorrichtung und
- Fig. 4: eine zweite Ausführungsform einer Inspektionsvorrichtung.

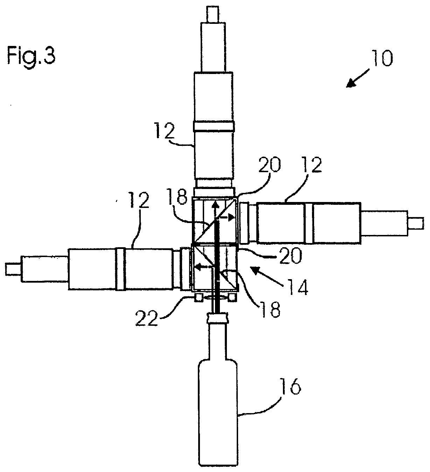

In Fig. 3 ist beispielhaft eine erste Ausführungsform einer Inspektionsvorrichtung 10 dargestellt, bei der verschiedene, im gezeigten Beispiel drei Kameras 12 über optische Pfade, die durch einen optischen Kanal 14 verlaufen, einen zu inspizierenden Behälter 16, im gezeigten Beispiel eine Getränkeflasche, inspizieren.

Dabei ist in an sich bekannter Weise eine Beleuchtungsvorrichtung (nicht dargestellt) bspw. unterhalb der aus transparentem oder transluzentem Material, bspw. Glas oder Kunststoff bestehenden Flasche 16 angeordnet. Diese wird somit durchleuchtet und dabei von oben durch ihren Mündungsbereich beobachtet.

Hierzu weist die Inspektionsvorrichtung 10 eine Eingangsoptik 22 in Form eines Linsensystems auf. Optische Pfade (in Fig. 3 gestrichelt dargestellt) verlaufen zwischen den Kameras 12 und der Flasche 16 durch den optischen Kanal 14 und das Linsensystem 22.

Innerhalb des optischen Kanals 14 sind dabei zwei Strahlteiler 18 angeordnet, d. h. optische Elemente mit teils durchlässigen und teils reflektierenden optischen Eigenschaften. Hierdurch wird das Bild des Behälters 16 in drei getrennte optische Pfade zu den Kameras 12 aufgeteilt, so dass jede Kamera einen jeweils zugeordneten Bereich der Flasche 16 inspizieren kann.

Dabei ist der optische Kanal 14 im gezeigten Beispiel aus zwei würfelförmigen Kanalelementen 20 gebildet. Diese sind im gezeigten Beispiel direkt übereinander angeordnet und weisen jeweils Einsätze auf, an denen die Strahlteiler 18 angeordnet sind.

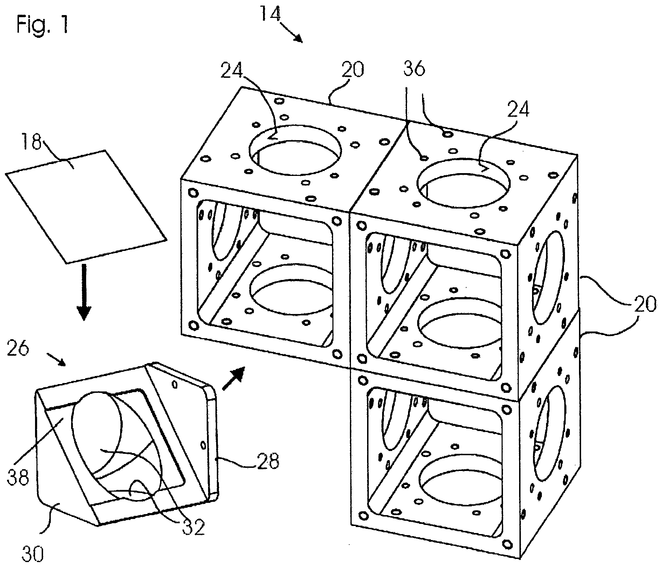

Fig. 1 zeigt in einer perspektivischen Darstellung wie ein optischer Kanal 14 modular aus würfelförmigen Kanalelementen 20 aufgebaut sein kann. Wie dort dargestellt, ist jedes Kanalelement 20 ausgebildet als würfelförmiger Hohlkörper mit einer einstückigen Wandung, die vier Seitenflächen bildet. Die Wandung schließt einen Innenbereich ein, der im Wesentlichen (d. h. bis auf die gerundeten Ecken) einen rechteckigen Querschnitt aufweist. Die Wandung der Kanalelemente 20 besteht in dem gezeigten Beispiel aus einem Aluminium-Gussmaterial.

Jedes Kanalelement 20 ist dabei rotationssymmetrisch aufgebaut mit vier gleichen Seitenflächen, in denen jeweils eine zentrale Öffnung 24 vorgesehen ist. Die Öffnungen 24 dienen zum Durchtritt der optischen Pfade. Sie sind jeweils paarweise in Flucht angeordnet.

An den beiden verbleibenden Seitenflächen sind die Kanalelemente 20 offen, so dass, wie in Fig. 1 schematisch dargestellt, ein Einsatz 26 in das Innere der Kanalelemente 22 eingeschoben werden kann. An diesen Seitenflächen können die Kanalelemente 20 durch Deckel (nicht dargestellt) geschlossen werden.

Der Einsatz 26 weist passende Abmessungen auf, so dass er beim Einschieben in die Kanalelemente 20 geführt und somit exakt positioniert wird. Der Einsatz 26 weist eine Grundplatte 28 und in der gezeigten bevorzugten Ausführung einen im Querschnitt etwa dreiecksförmigen Haltekörper 30 auf, in dem rechtwinklig zueinander zwei Bohrungen 32 gebildet sind. Am Haltekörper 30 ist zudem eine Halterung 38 für ein flaches Spiegel- bzw. Strahlteilerelement 18 gebildet.

Der Einsatz 26 kann im Inneren der Kanalelemente 20 in vier jeweils 90° gegeneinander gedrehten Lagen eingeschoben werden. In jeder Lage wird die Grundplatte 28, deren Außenkontur als Quadrat mit abgerundeten Ecken exakt in den Innenbereich jedes Kanalelements 20 passt, an der Wandung geführt und so exakt positioniert. Durch beidseitig am Kanalelement 20 angeordnete Deckel (nicht dargestellt) wird der Einsatz 26 in seiner Lage fixiert, wobei er an den in Fig. 1 dargestellten Befestigungsbohrungen mit einem Deckel bspw. verschraubt werden kann.

Insgesamt wird in der Anordnung der Kanalelemente 20 zueinander und in der Anordnung des Einsatzes 26 innerhalb eines Kanalelements 20 eine Toleranz von 0,1-0,2 mm eingehalten, so dass trotzt einfacher Handhabung ein sehr exakter optischer Aufbau erreicht wird.

In der Anordnung des Einsatzes 26 innerhalb des Kanalelements 20 sorgen die Bohrungen 32 für optischen Durchgang zwischen gegenüberliegenden Öffnungen 24 in den Seiten der Kanalelemente 20. Die Halterung 38 für das Spiegel-/Strahlteilerelement 18 ist im gezeigten Ausführungsbeispiel so unter 45° angeordnet, dass durch Reflektion an dem Element ein optischer Pfad zwischen den Öffnungen 24 in aneinander angrenzenden Seitenflächen gebildet ist, der optische Pfad also um 90° umgelenkt wird. Dazu wird wie in Fig. 1 gezeigt das flache optische Element 18 in die entsprechende Halterung 38 am Haltekörper 30 eingesetzt.

In alternativen Ausführungen kann der Haltekörper 30 eine abweichende Querschnittsform aufweisen, bspw. eine Dreiecksform mit abweichendem Winkel, so dass statt der bevorzugten rechtwinkligen Ablenkung durch das Spiegel-/Strahlteilerelement unter 45° auch eine Ablenkung unter anderen Winkeln möglich ist, und insbesondere eine Trapezform, bspw. mit zwei Reflexionsflächen unter 45°, mit denen eine Aufspaltung des optischen Pfades mit Ablenkung unter bspw. jeweils 90° in zwei verschiedene Richtungen möglich ist.

Zur Bildung des optischen Kanals 14 sind die Kanalelemente 20 aneinander befestigt. Hierzu dienen Befestigungsbohrungen 36, die bei jedem Kanalelement 20 jeweils an vier Seitenflächen mit identischem Bohrbild vorgesehen sind. Durch Verschraubung an den Befestigungsbohrungen 36 sind auch die Kameras 12 (in Fig. 1 nicht dargestellt) am optischen Kanal 14 befestigt.

Aus den Kanalelementen 20 lassen sich leicht in modularer Bauweise verschiedene optische Kanäle aufbauen. Ebenso kann ein bestehender optischer Kanal umgebaut werden.

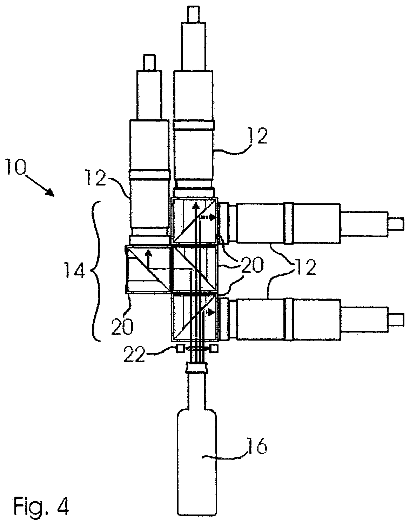

Beispielsweise zeigt Fig. 4 eine zweite Ausführungsform einer Inspektionsvorrichtung 10, in diesem Beispiel mit vier Kameras 12. Dabei ist der optische Kanal 14 aus vier Kanalelementen 20 aufgebaut.

Wie sich dem Fachmann leicht erschließt, können mit den würfelförmigen Kanalelementen 20 und optischen Elementen an den Einsätzen 26 eine Vielzahl verschiedener optischer Kanäle für viele Einsatzzwecke aufgebaut werden. Dabei muss die Strahlengangslänge nicht für jedes aus den Kanalelementen 20 modular aufgebaute System einzeln vermessen werden, sondern stellt jeweils ein ganzzahliges Vielfaches der Kantenlänge der würfelförmigen Kanalelemente 20 dar, wobei die Strahlengangslänge insgesamt unabhängig davon ist, ob der jeweilige optische Pfad gerade durch die Kanalelemente hindurchgeführt oder an einem Spiegel- bzw. Strahlteilerelement 18 reflektiert wird. Entsprechend können angepasst Linsen der Eingangsoptik 22 vorgesehen sein, um für die jeweils bekannte Strahlengangslänge eine geeignete Abbildung des interessierenden Bereiches für die zugeordnete Kamera 12 zu gewährleisten.

Dabei sind, wie der Fachmann verstehen wird, zu den gezeigten Ausführungsbeispielen Abweichungen möglich. Beispielsweise können bereits innerhalb der Kanalelemente 20 Halterungen für optische Elemente in verschiedenen Lagen vorgesehen sein. Auch ist die Erfindung nicht auf die in den gezeigten Beispielen gewählten Anordnungen von Kanalelementen stets in einer Ebene beschränkt; vielmehr können die Kanalelemente auch hintereinander in mehreren Ebenen angeordnet werden.

## Patentansprüche

1. Inspektionsvorrichtung zum Kontrollieren von Behältern, mit
- mindestens zwei Kameras (12) zur optischen Kontrolle mindestens eines Bereiches eines Behälter (16),
- und mindestens einem optischen Kanal (14), durch den mindestens ein optischer Pfad zwischen einer ersten Kamera (12) und dem Behälter (16) und ein zweiter optischer Pfad zwischen einer zweiten Kamera (12) und dem Behälter (16) verläuft,
- wobei der optische Kanal (14) mindestens zwei gleiche Kanalelemente (20) aufweist, die jeweils Öffnungen (24) aufweisen, durch die die optischen Pfade verlaufen,
- und wobei mindestens eines der Kanalelemente (20) einen Einsatz (26) zur Aufnahme in einem Kanalelement (20) aufweist,
- wobei der Einsatz (26) eine Halterung (38) für mindestens ein Strahlteilelement, aufweist, an dem der erste optische Pfad vom zweiten optischen Pfad getrennt wird, wobei
- der Einsatz (26) zwei Öffnungen (32) zum Durchtritt von optischen Pfaden aufweist, und wobei
- die Öffnungen (32) als Bohrungen gebildet sind, die zueinander einen Winkel bilden.

2. Inspektionsvorrichtung nach Anspruch 1, bei der
- die Kanalelemente (20) jeweils als Hohlelemente ausgebildet sind, bei denen eine Wandung einen Innenraum umgibt.

3. Inspektionsvorrichtung nach einem der vorangehenden Ansprüche, bei der
- die Kanalelemente (20) jeweils quaderförmig ausgebildet sind,
- wobei mindestens drei Öffnungen (24) in Seitenflächen des Quaders gebil-
- wobei mindestens drei Öffnungen (24) in Seitenflächen des Quaders gebildet sind, durch die ein optischer Pfad verlaufen kann.

4. Inspektionsvorrichtung nach Anspruch 3, bei der
- die Kanalelemente (20) einen rotationssymmetrischen Aufbau aufweisen.

5. Inspektionsvorrichtung nach Anspruch 3 oder 4, bei der
- die Kanalelemente (20) würfelförmig ausgebildet sind.

6. Inspektionsvorrichtung nach einem der vorangehenden Ansprüche, bei der
- die Kanalelemente (20) jeweils mindestens drei Öffnungen (24) aufweisen, durch die ein optischer Pfad verlaufen kann,
- von denen mindestens eine erste und eine zweite Öffnung (24) in Flucht, und eine dritte Öffnung (24) unter einem Winkel hierzu angeordnet ist,
- und mindestens eine Halterung (38) für ein Strahlteilelement (18) oder Spiegelelement so vorgesehen ist, dass ein optischer Pfad von der ersten Öffnung (24) über eine Reflektion am Strahlteilelement (18) oder Spiegelelement zur dritten Öffnung (24) verläuft.

7. Inspektionsvorrichtung nach Anspruch 6, bei der
- der Einsatz (26) entlang einer Führung in ein Kanalelement (20) eingeschoben werden kann.

8. Inspektionsvorrichtung nach einem der vorangehenden Ansprüche, bei der
- die Kanalelemente (20) jeweils Seitenflächen mit identischer Anordnung einer Anzahl von Befestigungsbohrungen (36) aufweisen.

9. Inspektionsvorrichtung nach einem der vorangehenden Ansprüche, bei der
- mindestens ein Linsenelement (22) im optischen Pfad zwischen dem optischen Kanal (14) und dem Behälter (16) angeordnet ist.

10. Einsatz zur Verwendung in einer Inspektionsvorrichtung nach einem der vorangehenden Ansprüche (26) zur Aufnahme in einem Kanalelement (20), wobei der Einsatz (26) eine Halterung (38) für ein Strahlteilelement aufweist, an dem der erste optische Pfad vom zweiten optischen Pfad getrennt wird, und wobei
- der Einsatz (26) zwei Öffnungen (32) zum Durchtritt von optischen Pfaden aufweist, und wobei
- die Öffnungen (32) als Bohrungen gebildet sind, die zueinander einen Winkel bilden.

## Claims

1. Inspection device for inspecting containers, with
- at least two cameras (12) for the optical inspection of at least one region of a container (16),
- and at least one optical channel (14), through which there runs at least one optical path between a first camera (12) and the container (16), and a second optical path between a second camera (12) and the container (16),
- wherein the optical channel (14) comprises at least two channel elements (20) which are the same, which in each case comprise openings (24), through which the optical paths run,
- and wherein at least one of the channel elements (20) comprises an insert (26) to be received in a channel element (20),
- wherein the insert (26) comprises a holding element (38) for at least one beam splitting element, at which the first optical path is separated from the second optical path, wherein
- the insert (26) comprises two openings (32) for the passage of optical paths, and wherein
- the openings (32) are formed as holes, which form an angle to one another.

2. Inspection device according to claim 1, wherein
- the channel elements (20) are each formed as hollow elements, wherein a wall surrounds an interior space.

3. Inspection device according to any one of the preceding claims, wherein
- the channel elements (20) are each formed as cuboid,
- wherein at least three openings (24) are formed in the side surfaces of the cuboid, through which an optical path can run.

4. Inspection device according to claim 3, wherein
- the channel elements (20) exhibit a rotationally symmetrical structure.

5. Inspection device according to claim 3 or 4, wherein
- the channel elements (20) are configured as cubical.

6. Inspection device according to any one of the preceding claims, wherein
- the channel elements (20) each exhibit at least three openings (24) through which an optical path can run,
- of which at least one first and one second opening (24) are arranged in alignment, and a third opening (24) is arranged at an angle to these,
- and at least one holding element (38) is provided for a beam splitting element (18) or mirror element in such a way that an optical path runs from the first opening (24) to the third opening (24) by way of a reflection at the beam splitting element (18) or mirror element.

7. Inspection device according to claim 6, wherein
- the insert (26) can be pushed along a guide into a channel element (20).

8. Inspection device according to any one of the preceding claims, wherein
- the channel elements (20) each comprise side surfaces with an identical arrangement of a number of securing holes (36).

9. Inspection device according to any one of the preceding claims, wherein
- at least one lens element (22) is arranged in the optical path between the optical channel (14) and the container (16).

10. Insert (26) for use in an inspection device according to any one of the preceding claims, for receiving in a channel element (20), comprises a holding element (38) for a beam splitting element, at which the first optical path is separated from the second optical path, and wherein
- the insert (26) comprises two openings (32) for the passage of optical paths, and wherein
- the openings (32) are formed as holes, which form an angle to one another.

## Revendications

1. Dispositif d'inspection pour contrôler des contenants, avec
- au moins deux caméras (12) pour le contrôle optique d'au moins une zone d'un contenant (16),
- et au moins un canal optique (14), à travers lequel au moins un chemin optique s'étend entre une première caméra (12) et le contenant (16) et un deuxième chemin optique s'étend entre une deuxième caméra (12) et le contenant (16),
- dans lequel le canal optique (14) présente au moins deux éléments de canal (20) identiques, qui présentent respectivement des ouvertures (24) à travers lesquelles les chemins optiques s'étendent,
- et dans lequel au moins un des éléments de canal (20) présente un insert (26) destiné à être logé dans un élément de canal (20),
- dans lequel l'insert (26) présente une fixation (38) pour au moins un élément séparateur de faisceau, sur lequel le premier chemin optique est séparé du deuxième chemin optique, dans lequel
- l'insert (26) présente deux ouvertures (32) destinées au passage de chemins optiques, et dans lequel
- les ouvertures (32) sont formées en tant qu'alésages, qui forment les uns par rapport aux autres un angle.

2. Dispositif d'inspection selon la revendication 1, où
- les éléments de canal (20) sont réalisés respectivement en tant qu'éléments creux, pour lesquels une paroi entoure un espace intérieur.

3. Dispositif d'inspection selon l'une quelconque des revendications précédentes, où
- les éléments de canal (20) sont réalisés respectivement en forme carrée,
- dans lequel au moins trois ouvertures (24) sont formées dans des faces latérales du carré, à travers lesquelles un chemin optique peut s'étendre.

4. Dispositif d'inspection selon la revendication 3, où
- les éléments de canal (20) présentent une structure symétrique en rotation.

5. Dispositif d'inspection selon la revendication 3 ou 4, où
- les éléments de canal (20) sont réalisés en forme de dé.

6. Dispositif d'inspection selon l'une quelconque des revendications précédentes, où
- les éléments de canal (20) présentent respectivement au moins trois ouvertures (24), à travers lesquelles un chemin optique peut s'étendre,
- dont au moins une première et une deuxième ouverture (24) sont disposées de manière alignée et une troisième ouverture (24) est disposée selon un angle par rapport à celles-ci,
- et au moins une fixation (38) pour un élément séparateur de faisceau (18) ou un élément miroir est prévu de telle sorte qu'un chemin optique s'étend depuis la première ouverture (24) vers la troisième ouverture (24) par l'intermédiaire d'une réflexion sur l'élément séparateur de faisceau (18) ou l'élément miroir.

7. Dispositif d'inspection selon la revendication 6, où
- l'insert (26) peut être enfilé dans un élément de canal (20) le long d'un guidage.

8. Dispositif d'inspection selon l'une quelconque des revendications précédentes, où
- les éléments de canal (20) présentent respectivement des faces latérales avec un agencement identique d'un nombre d'alésages de fixation (36).

9. Dispositif d'inspection selon l'une quelconque des revendications précédentes, où
- au moins un élément de lentille (22) est disposé sur le chemin optique entre le canal optique (14) et le contenant (16).

10. Insert destiné à être utilisé dans un dispositif d'inspection selon l'une quelconque des revendications précédentes, destiné à être logé dans un élément de canal (20), dans lequel l'insert (26) présente une fixation (38) pour un élément séparateur de faisceau, sur lequel le premier chemin optique est séparé du deuxième chemin optique, et dans lequel
- l'insert (26) présente deux ouvertures (32) destinées au passage de chemins optiques, et dans lequel
- les ouvertures (32) sont formées en tant qu'alésages, qui forment les uns par rapport aux autres un angle.
